# EUROPÄISCHE PATENTSCHRIFT

(11) **EP 1 789 232 B1**
(45) Veröffentlichungstag und Bekanntmachung des Hinweises auf die Patenterteilung: **11.10.2017**
(21) Anmeldenummer: 05758637.2
(22) Anmeldetag: 01.07.2005
(51) Int. Cl.: B23Q 3/12

(54) **HANDWERKZEUGMASCHINE MIT EINER AUSTAUSCHBAREN WERKZEUGAUFNAHME**
PORTABLE POWER TOOL COMPRISING AN EXCHANGEABLE TOOL HOLDING FIXTURE
MACHINE POUR OUTILS A MAIN A PORTE-OUTIL INTERCHANGEABLE

(30) Priorität: 02.09.2004 DE 102004042465
(43) Veröffentlichungstag der Anmeldung: 30.05.2007
(73) Patentinhaber: ROBERT BOSCH GMBH, 70442 Stuttgart (DE)
(72) Erfinder: FRAUHAMMER, Karl, 70771 Leinfelden-Echterdingen (DE); BAUMANN, Otto, 70771 Leinfelden-Echterdingen (DE); MUELLER, Rolf, 70771 Leinfelden-Echterdingen (DE); SCHNERRING, Heinz, 72135 Dettenhausen (DE); SAUR, Dietmar, 72810 Gomaringen (DE); BRAUN, Willy, 72149 Neustetten (DE); KUHNLE, Axel, 71691 Freiberg A. N. (DE); BERNHARDT, Thomas, 72631 Aichtal-Groetzingen (DE); ENGELFRIED, Uwe, 73760 Ostfildern (DE)
(86) Internationale Anmeldenummer: PCT/EP2005/053126
(87) Internationale Veröffentlichungsnummer: WO 2006/024565

(56) Entgegenhaltungen:
- EP-A- 0 556 713
- DE-A1- 10 005 910
- DE-A1- 10 047 021
- DE-A1- 19 621 610
- FR-A- 1 424 002

## Beschreibung

### Stand der Technik

Es soll eine Handwerkzeugmaschine, zum Beispiel ein Bohrhammer mit einer Werkzeugaufnahme angegeben werden, die schnell und einfach ausgetauscht werden kann. Entweder soll ein Austausch zwischen zwei unterschiedlichen Werkzeugaufnahmen möglich sein, oder es soll eine abgenutzte Werkzeugaufnahme gegen eine neue ausgetauscht werden können. Das können Werkzeugaufnahmen für Bohrer und Meißel zum Schlagbohren und Meißeln in Gestein sein oder es können Werkzeugaufnahmen zum Bohren ohne Schlag in Stahl und Holz und zum Schrauben sein. In die Werkzeugaufnahmen können Werkzeuge mit Systemeinsteckende (z. B. SDS-plus) oder mit rundem oder sechskantigem Einsteckende eingesetzt werden.

Eine Handwerkzeugmaschine mit einer austauschbaren Werkzeugaufnahme ist z. B. aus der DE 196 21 610 A1 bekannt. Dabei weist die Abtriebsspindel, auf die die Werkzeugaufnahme aufsetzbar ist, mehrere Profilkörper auf, und die Werkzeugaufnahme ist mit Profilaussparungen versehen, worin Profilkörper einrasten können und somit die Werkzeugaufnahme axial auf der Abtriebsspindel gehalten wird. Für die Drehmitnahme zwischen Abtriebsspindel und Werkzeugaufnahme sind an beiden Teilen ineinander greifende Verzahnungen vorgesehen. Für das Aufsetzen der Werkzeugaufnahme auf die Abtriebsspindel ist keine Betätigungshülse erforderlich. Für das Einrasten der Werkzeugaufnahme auf der Abtriebsspindel muss darauf geachtet werden, dass die Werkzeugaufnahme im richtigen Drehwinkel auf die Abtriebsspindel aufgesetzt wird, so dass die Profilkörper ihre zugehörigen Profilaussparungen finden. Das erschwert die Montage der Werkzeugaufnahme an der Handwerkzeugmaschine.

In der DE 100 05 910 A1 ist eine Handwerkzeugmaschine mit den Merkmalen des Oberbegriffs des Anspruchs 1 beschrieben, die eine Werkzeughalterung aufweist, die mit ihrem Grundkörper lösbar mit einem Antriebsteil über zumindest einen Verriegelungskörper verbindbar ist. Der Grundkörper und das Antriebsteil sind über eine Verzahnung in Umfangsrichtung miteinander verbunden. Aufgabe der Erfindung ist es, eine Handwerkzeugmaschine mit einer austauschbaren Werkzeugaufnahme weiter zu verbessern bzw. zu vereinfachen.

Diese Aufgabe wird mit den Merkmalen des Anspruchs 1 gelöst. Damit ist es egal unter welchem Drehwinkel die Werkzeugaufnahme auf die Maschine aufgesetzt wird. Die Werkzeugaufnahme findet trotzdem von allein ihre richtige Position zum Einrasten. Vorteilhafte Weiterbildungen der Erfindung gehen aus den Unteransprüchen hervor.

### Zeichnung

Anhand eines in der Zeichnung dargestellten Ausführungsbeispiels wird nachfolgend die Erfindung näher erläutert. Es zeigen:

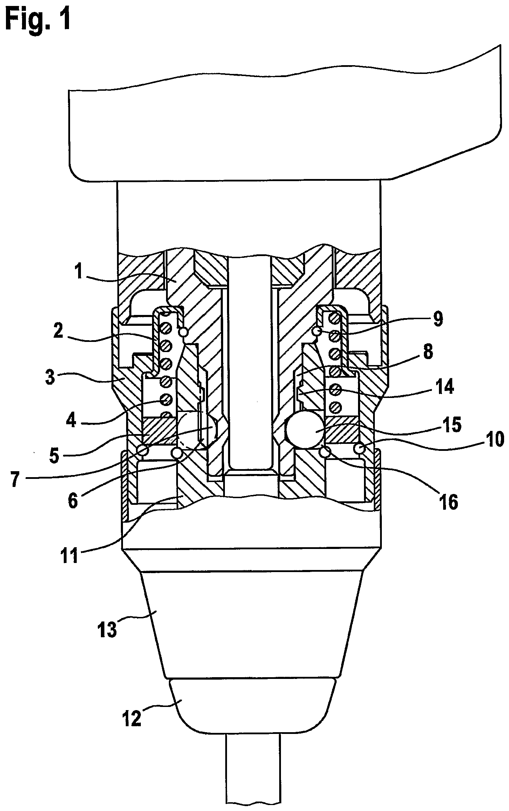

Figur 1 bis 3 eine Werkzeugaufnahme in verschiedenen Stadien des Aufschiebens auf eine Handwerkzeugmaschine.

### Beschreibung

Wie das Bild 1 zeigt, sind die Handwerkzeugmaschine, zum Beispiel ein Bohrhammer, und die darauf aufsetzbare Werkzeugaufnahme folgendermaßen aufgebaut:
Der Bohrhammer weist eine Abtriebsspindel 1, die hier als Hammerrohr 1 ausgeführt ist, eine Aufnahmehülse 2, eine Entriegelungshülse 3, eine Druckfeder 4 und einen Stützring 5 auf. Das Hammerrohr 1 weist ein oder mehrere am Umfang verteilte Profilaussparungen 7 und eine oder mehrere am Umfang verteilte Nuten 8 auf. Die Aufnahmehülse 2, die Entriegelungshülse 3, die Druckfeder 4, der Stützring 5 und ein Sicherheitsring 10 für den Stützring 5 können als eine vormontierte Baugruppe ausgeführt werden, die mittels einer Sicherung 9 auf dem Hammerrohr 1 befestigt werden kann.

Die Druckfeder 4 und ein Sicherungsring 10 halten die Entriegelungshülse 3 und den Stützring 5 axial verschiebbar auf der Aufnahmehülse 2. Die Werkzeugaufnahme 11 besitzt außer den vorangehend genannten Elementen eine Staubschutzkappe 12, eine Schutzhülse 13 ein oder mehrere am Umfang verteilte Eindrehprofile 14 und ein oder mehrere am Umfang verteilte Profilkörper 15, die im dargestellten Ausführungsbeispiel Kugeln 15 sind.

Die Profilkörper 15 sind in Öffnungen 16 in der auf das Hammerrohr 1 aufschiebbaren rohrförmigen Werkzeugaufnahme 11 radial beweglich gelagert. Angepasst an die Form der Profilkörper 15 ist die Form der in das Hammerrohr 1 eingelassenen Profilaussparungen 7, so dass die Profilkörper 15 in die Profilaussparungen 7 hineinpassen.

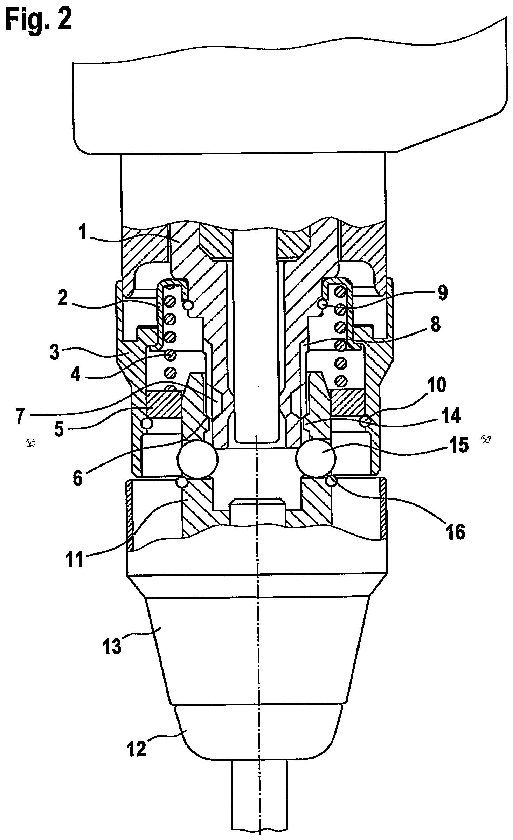

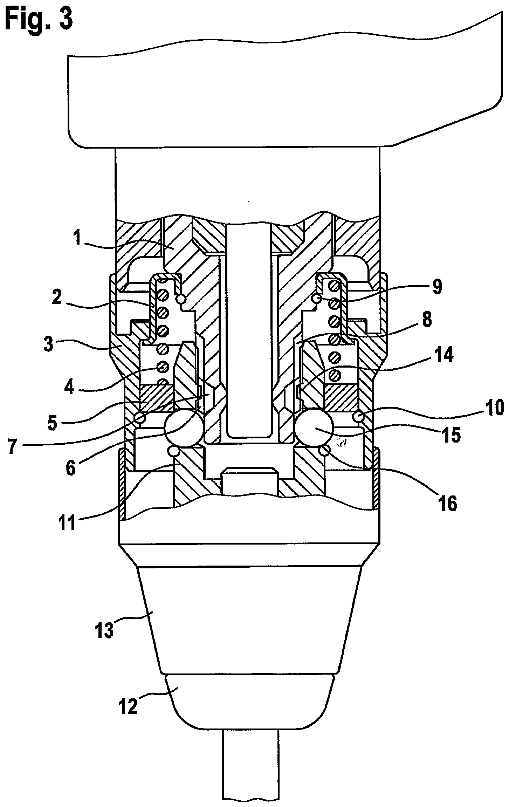

Im Folgenden wird die Montage der Werkzeugaufnahme 11 auf den Bohrhammer beschrieben.
- Aufschieben der Werkzeugaufnahme 11 auf das Hammerrohr 1 bis das mindestens eine Eindrehprofil 14 an den Absatz 6 anschlägt (vergleiche Darstellung in Fig. 2).
- Verdrehen der Werkzeugaufnahme 11 bis das mindestens eine Eindrehprofil 14 am Absatz 6 entlang gleitend, in die mindestens eine Nut 8 eingreift. Die Nut 8 ist am Eingang aufgeweitet, um das Einführen des Eindrehprofils 14 zu erleichtern. Das Eindrehprofil 14 ist z. B. ein an der Innenseite der rohrförmigen Werkzeugaufnahme 11 angeformter nasenförmiger Vorsprung.
- Während das Eindrehprofil 14 in die Nut 8 hineinfährt, ist ein weiteres Aufschieben der Werkzeugaufnahme 11 möglich, wobei die mindestens eine Kugel 15 gegen den Stützring 5 läuft (vergleiche Darstellung in Fig. 3).
- Beim weiteren Aufschieben der Werkzeugaufnahme 11 wird der Stützring 5 von der mindestens einen Kugel 15 gegen die Kraft der Druckfeder 4 verschoben bis die mindestens eine Kugel 15 in die Profilaussparung 7 (Kugelkalotte) eintauchen kann.
- Sobald die mindestens eine Kugel 15 in die Profilaussparung 7 eintaucht, schiebt die Druckfeder 4 den Stützring 5 über die mindestens eine Kugel 15.
- Die mindestens eine Kugel 15 wirkt als Drehmitnahme und zur axialen Fixierung der Werkzeugaufnahme 11 auf dem Hammerrohr 1 des Bohrhammers.

Die beim dargestellten Ausführungsbeispiel an der Werkzeugaufnahme 11 angeordneten Mittel - Eindrehprofil 14, Profilkörper 15 - und die am Hammerrohr 1 der Handwerkzeugmaschine angeordneten Mittel - Profilaussparung 7, Nut 8 -können auch vertauscht angeordnet werden, nämlich die Mittel der Werkzeugaufnahme 11 am Hammerrohr 1 und umgekehrt.

Die oben beschriebene Montage der Werkzeugaufnahme 11 auf das Hammerrohr 1 des Bohrhammers erfordert keine Betätigung der Entriegelungshülse 3. Durch die geringe Reibung zwischen dem mindestens einen Eindrehprofil 14 an der Werkzeugaufnahme 11 und dem Absatz 6 am Hammerrohr 1 ist das Eindrehen des Eindrehprofils 14 in die Nut 8 sichergestellt, obwohl die Staubschutzkappe 12 und die Schutzhülse 13 verdrehbar zur Werkzeughalterung 11 ausgeführt sind.

Folgende Vorteile weist die vorangehend beschriebene austauschbare Werkzeugaufnahme auf: Die Drehmitnahme und axiale Fixierung der austauschbaren Werkzeugaufnahme 11 auf dem Hammerrohr 1 des Bohrhammers geschieht lediglich mittels mindestens einer Kugel 15, einer zugehörigen Öffnung 16 und einer Profilaussparung 7 im Hammerrohr 1. Die Werkzeugaufnahme 11 kann auf den Bohrhammer aufgesetzt werden, ohne dass es erforderlich ist, die Entriegelungshülse 3 zu betätigen. Da zwischen dem mindestens einen Eindrehprofil 14 an der Werkzeugaufnahme 11 und dem Absatz 6 am Hammerrohr 1 eine sehr geringe Reibung besteht, können die Schutzkappe 12, die Schutzhülse 13 und der Entriegelungsring 3 verdrehbar ausgeführt werden, so dass keine Verletzungsgefahr besteht, wenn die Teile versehentlich vom Anwender berührt oder festgehalten werden. Wegen der Verdrehbarkeit der genannten Teile können diese auch nicht durch Scheuern beschädigt werden, wenn sie an einem Werksstück oder an einer Wand streifen. Weil die Reibung zwischen dem Eindrehprofil 14 und dem Absatz 6 des Hammerrohrs 1 geringer ist als der Drehwiderstand der Schutzkappe 12 und der Schutzhülse 13, kann durch Drehen und Schieben an der Schutzklappe 12 und der Schutzhülse 13 die Werkzeugaufnahme in ihre Verriegelungsstellung eingerastet werden.

Die mindestens eine Profilaussparung 7 und die mindestens eine Nut 8 sind axial hintereinander am Hammerrohr 1 angeordnet. Diese Anordnung hat den Vorteil, dass zur Fertigung der mindestens einen Kugelaussparung 7 und der mindestens einen Nut 8 dasselbe Werkzeug verwendet werden kann. Dazu passend sind die mindestens eine Öffnung 16 und das mindestens eine Eindrehprofil 14 an der Werkzeugaufnahme 11 ebenfalls axial hintereinander angeordnet.

Die Demontage der Werkzeugaufnahme 11 vom Bohrhammer geschieht folgendermaßen:
Durch Ziehen der Entriegelungshülse 3 zum Bohrhammer hin wird der Stützring 5 durch den Sicherungsring 10 verschoben und gibt die mindestens eine Kugel frei, so dass diese aus der Kugelaussparung 7 austauchen kann und danach die Werkzeugaufnahme 11 abnehmbar ist.

## Patentansprüche

1. Handwerkzeugmaschine mit einer austauschbaren Werkzeugaufnahme, wobei an einer Abtriebsspindel (1) der Handwerkzeugmaschine mindestens ein beweglich gelagerter Profilkörper (15) und an der Werkzeugaufnahme (11) mindestens eine Profilaussparung (7) oder an der Werkzeugaufnahme (11) der Handwerkzeugmaschine mindestens ein beweglich gelagerter Profilkörper (15) und an der Abtriebsspindel (1) mindestens eine Profilaussparung (7) so geformt und so angeordnet sind, dass beim Aufschieben der Werkzeugaufnahme (11) auf die Abtriebsspindel (1) der mindesten eine Profilkörper (15) in die mindestens eine Profilaussparung (7) einrastet, womit sowohl eine axiale Verriegelung als auch eine Drehmitnahme der Werkzeugaufnahme (11) an der Abtriebsspindel (1) erfolgt, wobei Mittel (6, 8, 14) vorhanden sind, welche durch eine Dreh- und Schiebebewegung der Werkzeugaufnahme (11) auf der Abtriebsspindel (1) den Profilkörper (15) in die Profilaussparung (7) führen,
wobei an der Abtriebsspindel (1) oder der Werkzeugaufnahme (11) ein radial umlaufender Absatz (6) vorhanden ist und an der Werkzeugaufnahme (11) beziehungsweise an der Abtriebsspindel (1) mindestens ein Eindrehprofil (14) angeordnet ist, das beim Aufsetzen der Werkzeugaufnahme (11) auf die Abtriebsspindel (1) an den Absatz (6) stößt, und dass der Absatz (6) für jedes der vorhandenen Eindrehprofile (14) jeweils eine in eine Nut (8) einmündende Unterbrechung aufweist, wobei das mindestens eine Eindrehprofil (14) und die zugehörige Nut (8) relativ zu dem mindestens einen Profilkörper (15) und der zugehörigen Profilaussparung (7) so angeordnet sind, dass beim Hineingleiten des Eindrehprofils (14) in die zugehörige Nut (8) der Profilkörper (15) in die zugehörige Profilaussparung (7) hinein geführt wird, **dadurch gekennzeichnet, dass** die Profilaussparung (7) den den Absatz (6) unterbrechenden Eingang für die Nut (8) bildet und die Profilaussparung (7) eine gegenüber der Abmessung des Eindrehprofils (14) erweiterten Eingang für die Nut (8) bildet.

2. Handwerkzeugmaschine nach Anspruch 1, **dadurch gekennzeichnet, dass** die mindestens eine Nut (8) in Richtung der Längsachse der Abtriebsspindel (1) seriell vor oder hinter der mindestens einen Profilaussparung (7) angeordnet ist.

3. Handwerkzeugmaschine nach einem der vorhergehenden Ansprüche, **dadurch gekennzeichnet, dass** das Eindrehprofil (14) ein an der Werkzeugaufnahme (11) oder an der Antriebsspindel (1) angeformter, radial hervorstehender, nasenförmiger Vorsprung ist.

4. Handwerkzeugmaschine nach einem der vorhergehenden Ansprüche, **dadurch gekennzeichnet, dass** ein in Richtung der Längsachse der Werkzeugaufnahme (11) federnd gelagerter Stützring (5) vorhanden ist, der beim Aufschieben der Werkzeugaufnahme (11) auf die Abtriebsspindel (1) von dem mindestens einen Profilkörper (15) verschoben wird und der den mindestens einen Profilkörper (15) überdeckt, wenn er in seiner Profilaussparung (7) in Eingriff ist.

5. Handwerkzeugmaschine nach Anspruch 5, **dadurch gekennzeichnet, dass** eine Entriegelungshülse (3) vorhanden ist, mit der der Stützring (5) verschiebbar ist, so dass der mindestens eine Profilkörper (15) aus seiner Profilaussparung (7) heraustreten kann.

## Claims

1. Portable power tool having an exchangeable tool receptacle, wherein at least one movably mounted profiled body (15) is formed and arranged on an output spindle (1) of the portable power tool and at least one profiled cutout (7) is formed and arranged in the tool receptacle (11) or at least one movably mounted profiled body (15) is formed and arranged on the tool receptacle (11) of the portable power tool and at least one profiled cutout (7) is formed and arranged in the output spindle (1) such that, when the tool receptacle (11) is pushed onto the output spindle (1), the at least one profiled body (15) latches in the at least one profiled cutout (7), with the result that both axial locking and rotary entrainment of the tool receptacle (11) on the output spindle (1) takes place,
wherein means (6, 8, 14) are provided which guide the profiled body (15) into the profiled cutout out (7) by way of a rotary and pushing movement of the tool receptacle (11) on the output spindle (1),
wherein a radially encircling shoulder (6) is provided on the output spindle (1) or on the tool receptacle (11) and at least one screw-in profile (14) is arranged on the tool receptacle (11) or on the output spindle (1), respectively, said screw-in profile butting against the shoulder (6) when the tool receptacle (11) is placed on the output spindle (1), and in that the shoulder (6) has, for each of the screw-in profiles (14) provided, a respective interruption that leads into a groove (8),
wherein the at least one screw-in profile (14) and the associated groove (8) are arranged relative to the at least one profiled body (15) and the associated profiled cutout (7) that, when the screw-in profile (14) slides into the associated groove (8), the profiled body (15) is guided into the associated profiled cutout (7), **characterized in that** the profiled cutout (7) forms the entrance, interrupting the shoulder (6), for the groove (8) and the profiled cutout (7) forms an entrance for the groove (8) that is enlarged with respect to the dimensions of the screw-in profile (14).

2. Portable power tool according to Claim 1, **characterized in that** the at least one groove (8) is arranged serially in front of or behind the at least one profiled cutout (7) in the direction of the longitudinal axis of the output spindle (1).

3. Portable power tool according to either of the preceding claims, **characterized in that** the screw-in profile (14) is a radially protruding, lug-like protrusion integrally formed on the tool receptacle (11) or on the output spindle (1).

4. Portable power tool according to one of the preceding claims, **characterized in that** a supporting ring (5) that is resiliently mounted in the direction of the longitudinal axis of the tool receptacle (11) is provided, said supporting ring (5) being displaced by the at least one profiled body (15) when the tool receptacle (11) is pushed onto the output spindle (1) and covering the at least one profiled body (15) when it is engaged in its profiled cutout (7).

5. Portable power tool according to Claim 5, **characterized in that** an unlocking sleeve (3) is provided, with which the supporting ring (5) is displaceable such that the at least one profiled body (15) can emerge from its profiled cutout (7).

## Revendications

1. Machine-outil portative avec un porte-outil interchangeable, dans laquelle au moins un corps profilé (15) monté de façon mobile est formé et disposé sur une broche de sortie (1) de la machine-outil portative et au moins un évidement profilé (7) est formé et disposé sur le porte-outil (11) ou au moins un corps profilé (15) monté de façon mobile est formé et disposé sur le porte-outil (11) de la machine-outil portative et au moins un évidement profilé (7) est formé et disposé sur la broche de sortie (1), de telle manière que lors de l'engagement du porte-outil (11) sur la proche de sortie (1) ledit au moins un corps profilé (15) se loge dans ledit au moins un évidement profilé (7), ce qui assure aussi bien un verrouillage axial qu'un entraînement en rotation du porte-outil (11) sur la broche de sortie (1),
dans laquelle il se trouve des moyens (6, 8, 14) qui conduisent par un mouvement de rotation et de glissement du porte-outil (11) sur la broche de sortie (1) le corps profilé (15) dans l'évidement profilé (7),
dans laquelle il se trouve sur la broche de sortie (1) ou sur le porte-outil (11) un épaulement radialement périphérique (6) et au moins un profil usiné (14) est disposé sur le porte-outil (11) ou sur la broche de sortie (1), qui bute contre l'épaulement (6) lors de la pose du porte-outil (11) sur la broche de sortie (1), et que l'épaulement (6) présente pour chacun des profils usinés présents (14) respectivement une interruption débouchant dans une rainure (8),
dans laquelle ledit au moins un profil usiné (14) et la rainure correspondante (8) sont disposés par rapport audit au moins un corps profilé (15) et à l'évidement profilé correspondant (7) de telle manière que, lors du glissement du profil usiné (14) dans la rainure correspondante (8), le corps profilé (15) soit conduit dans l'évidement profilé correspondant (7), **caractérisée en ce que** l'évidement profilé (7) forme l'entrée interrompant l'épaulement (6) pour la rainure (8) et l'évidement profilé (7) forme une entrée élargie par rapport à la dimension du profil usiné (14) pour la rainure (8).

2. Machine-outil portative selon la revendication 1, **caractérisée en ce que** ladite au moins une rainure (8) est disposée dans la direction de l'axe longitudinal de la broche de sortie (1) en série avant ou après ledit au moins un évidement profilé (7).

3. Machine-outil portative selon l'une quelconque des revendications précédentes, **caractérisée en ce que** le profil usiné (14) est une saillie en forme d'ergot, radialement saillante, formée sur le porte-outil (11) ou sur la broche de sortie (1).

4. Machine-outil portative selon l'une quelconque des revendications précédentes, **caractérisée en ce qu'**il se trouve une bague d'appui (5) supportée de façon élastique dans la direction de l'axe longitudinal du porte-outil (11), qui lors du glissement du porte-outil (11) sur la broche de sortie (1) est déplacée par ledit au moins un corps profilé (15) et qui recouvre ledit au moins un corps profilé (15), lorsqu'il est engagé dans son évidement profilé (7).

5. Machine-outil portative selon la revendication 5, **caractérisée en ce qu'**il se trouve une douille de déverrouillage (3), avec laquelle la bague d'appui (5) est déplaçable, de telle manière que ledit au moins un corps profilé (15) puisse sortir de son évidement profilé (7).
